# EUROPÄISCHE PATENTSCHRIFT

(11) **EP 0 984 829 B1**
(45) Veröffentlichungstag und Bekanntmachung des Hinweises auf die Patenterteilung: **11.12.2002**
(21) Anmeldenummer: 98936291.8
(22) Anmeldetag: 28.05.1998
(51) Int. Cl.: B01J 2/04, C01B 33/152

(54) **VERFAHREN ZUR HERSTELLUNG VON IM WESENTLICHEN KUGELFÖRMIGEN LYOGELEN SOWIE AEROGELEN**
METHOD FOR PRODUCING SUBSTANTIALLY GLOBULAR LYOGELS AND AEROGELS
PROCEDE DE PRODUCTION DE LYOGELS ET D'AEROGELS SE PRESENTANT SENSIBLEMENT SOUS LA FORME DE BILLES

(30) Priorität: 30.05.1997 DE 19722738
(43) Veröffentlichungstag der Anmeldung: 15.03.2000
(73) Patentinhaber: CABOT CORPORATION, Boston, Massachusetts 02210-2019 (US)
(72) Erfinder: FORBERT, Rainald, Corpus Christi, TX 78413 (US); SCHWERTFEGER, Fritz, D-60529 Frankfurt (DE); HARTEL, Johannes, D-65812 Bad Soden (DE)
(74) Vertreter: Luderschmidt, Schüler & Partner GbR
(86) Internationale Anmeldenummer: EP9803161
(87) Internationale Veröffentlichungsnummer: WO98053905

(56) Entgegenhaltungen:
- EP-A- 0 199 930
- EP-A- 0 589 350
- CH-A- 528 298
- DE-A- 1 667 078
- DE-A- 2 103 243

## Beschreibung

Gegenstand der vorliegenden Erfindung ist ein Verfahren zur Herstellung von im wesentlichen kugelförmigen Lyogelen sowie Aerogelen.

Aerogele, insbesondere solche mit Porositäten über 60 % und Dichten unter 0,6 g/cm³, weisen eine äußerst geringe Wärmeleitfähigkeit auf und finden deshalb Anwendung als Wärmeisoiationsmaterial, wie z.B. in der EP-A-0 171 722 beschrieben. Darüber hinaus ist die Verwendung für Çerenkov-Detektoren aufgrund ihrer für Feststoffe sehr geringen Brechzahl bekannt. Weiterhin ist in der Literatur aufgrund ihrer besonderen akustischen Impedanz eine mögliche Verwendung als Impedanzanpassung z.B. im Ultraschallbereich beschrieben. Auch ist ihre Anwendung als Träger für Wirkstoffe in Pharmazie oder Landwirtschaft bekannt.

Aerogele im weiteren Sinn, d.h. im Sinne von "Gel mit Luft als Dispersionsmedium", werden durch Trocknung eines geeigneten Gels hergestellt. Unter den Begriff "Aerogel" in diesem Sinne, fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel.

Bei der Verwendung des Begriffs Aerogele in der vorliegenden Anmeldung handelt es sich um Aerogele im weiteren Sinn, d.h. im Sinn von "Gel mit Luft als Dispersionsmedium".

Nicht unter den Begriff fallen aus der älteren Literatur bekannte Xerogele, die z.B. durch Fällung von Kieselsäure (z. B. DE-A-3025437, DD-A-296 898) erhalten werden, oder als pyrogene Kieselsäure, z.B. Aerosil® anfallen. In diesen Fällen bildet sich während der Herstellung kein über größere Distanzen homogenes dreidimensionales Gelnetzwerk aus.

Bei Aerogelen kann man grundsätzlich zwischen anorganischen und organischen Aerogelen unterschieden.

Anorganische Aerogele sind schon seit 1931 bekannt (S.S.Kistler, Nature 1931,127,741). Seitdem sind aus unterschiedlichsten Ausgangsmaterialien Aerogele dargestellt worden. Dabei konnten z. B. SiO₂-, Al₂O₃-, TiO₂-, ZrO₂-, SnO₂-, Li₂O-, CeO₂-, V₂O₅- Aerogele sowie Mischungen aus diesen hergestellt werden (H.D. Gesser, P.C.Goswami, Chem.Rev.1989, 89,765ff).

Seit einigen Jahren sind auch organische Aerogele aus unterschiedlichsten Ausgangsmaterialien, z.B. aus Melaminformaldehyd, bekannt (R.W. Pekala, J. Mater. Sci. 1989, 24, 3221).

Anorganische Aerogele können dabei auf unterschiedlichen Wegen hergestellt werden.

Zum einen können SiO₂-Aerogele beispielsweise durch saure Hydrolyse und Kondensation von Tetraethylorthosilikat in Ethanol hergestellt werden. Dabei entsteht ein Gel, das durch überkritische Trocknung unter Erhaltung der Struktur getrocknet werden kann. Auf dieser Trocknungstechnik basierende Herstellungsverfahren sind z.B. aus der EP-A-0 396 076 , der WO 92/03378 und der WO 95/06617 bekannt.

Die mit der überkritischen Trocknung von Aerogelen verbundene Hochdrucktechnik ist jedoch verfahrenstechnisch aufwendig und birgt ein hohes Sicherheitsrisiko. Zudem ist die überkritische Trocknung von Aerogelen ein sehr kostenintensives Herstellungsverfahren.
Eine prinzipielle Alternative zur überkritischen Trocknung bietet ein Verfahren zur unterkritischen Trocknung von SiO₂-Gelen. Die mit der unterkritischen Trocknung verbundenen Kosten sind aufgrund der einfacheren Technik, den niedrigeren Energiekosten und dem geringeren Sicherheitsrisiko wesentlich geringer.

Das SiO₂-Gel kann dabei beispielsweise durch saure Hydrolyse von Tetraalkoxysilanen in einem geeigneten organischen Lösungsmittel mittels Wasser erhalten werden. Nach Austausch des Lösungsmittels gegen ein geeignetes organisches Lösungsmittel wird in einem weiteren Schritt das erhaltene Gel mit einem Silylierungsmittel umgesetzt. Das dabei entstehende SiO₂-Gel kann anschließend aus einem organischen Lösungsmittel heraus an der Luft getrocknet werden. Damit können Aerogele mit Dichten unter 0,4 g/cm³ und Porositäten über 60 % erreicht werden. Das auf dieser Trocknungstechnik basierende Herstellungsverfahren ist ausführlich in der WO 94/25149 beschrieben.

Die oben beschriebenen Gele können darüber hinaus vor der Trocknung in der alkohol-wäßrigen Lösung mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch ebenfalls einen außerordentlich hohen Kostenfaktor dar.

Eine erhebliche Kostensenkung kann durch die Verwendung von Wasserglas als Ausgangsmaterial für die Herstellung der SiO₂-Gele erreicht werden. Dazu kann beispielsweise aus einer wäßrigen Wasserglaslösung mit Hilfe eines lonenaustauscherharzes eine Kieselsäure hergestellt werden, die durch Zugabe einer Base zu einem SiO₂-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Das dabei entstehende, auf der Oberfläche z. B. mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren ist aus der DE-A-43 42 548 bekannt.

Verfahrensalternativen bezüglich der Herstellung eines SiO₂-Hydrogels auf der Basis von Wasserglas mit anschließender unterkritischer Trocknung werden in den deutschen Patentanmeldungen 195 41 715.1 und 195 41 992.8 offenbart.

In der deutschen Patentanmeldung 196 48 798.6 wird ein Verfahren zur Herstellung von Aerogelen offenbart, bei dem Hydrogele ohne vorherigen Lösungsmitteltausch, d.h. mit im wesentlichen Wasser in den Poren, oberflächenmodifiziert und anschließend getrocknet werden.

Aus der DE-PS 896189 ist bekannt, daß man kugelförmige Kieselsäurehydrogele dadurch herstellen kann, daß man aus einem kieselsäurehaltigen Rohstoff, z.B. Wasserglas, durch Umsetzung mit einer Säure, z.B. Schwefelsäure, ein gelbildendes Kieselsäurehydrosol herstellt und dieses in Form einzelner Tropfen durch ein mit Wasser und dem Hydrosol nicht mischbares gasförmiges oder flüssiges Medium, z.B. ein Mineralöl, hindurchleitet. Die Hydrosoltropfen nehmen dabei eine mehr oder weniger kugelförmige Gestalt an und verbleiben so lange in der Ölschicht, bis die Umwandlung vom Sol in das feste Hydrogel erfolgt ist. Die nach dem aufgezeigten Verfahren hergestellten Hydrogelkugeln weisen jedoch Mineralölverunreinigungen auf, die auch mit sehr aufwendigen Wäschen nicht vollständig entfernt werden können.

Sofern bei diesem Verfahren die Mischung in ein gasförmiges Medium verspritzt wird, arbeitet man so, daß man aus Wasserglas, Schwefelsäure und Aluminiumsulfat mittels einer Mischdüse zunächst Hydrosoltröpfchen erzeugt, die in einen mit Luft gefüllten Kessel gespritzt werden. Unter den angewandten Bedingungen erfolgt die Umwandlung des Hydrosols zu einem Hydrogel innerhalb etwa einer Sekunde, so daß die kleinen Hydrogeltröpfchen in einer Wasserschicht am Boden des Kessels aufgefangen und weiterverarbeitet werden können.

In der DE-C-21 03 243 wird ein Verfahren und eine Vorrichtung zur Herstellung von weitgehend kugelförmigen, Kieselsäure enthaltenden Hydrogelen beschrieben, wobei das Kieselsäurehydrosol in einer speziellen Mischdüse aus einem kiesetsäurehaltigen Rohstoff und einer sauren Lösung gebildet wird. Das so gebildete Hydrosol wird zwecks Tropfenbildung in ein gasförmiges Medium, das sich in dem Hydrosol nicht merklich löst, z.B. Luft, verspritzt.

Aufgrund der erforderlichen Fallzeit als Reaktionszeit zur Gelbildung ergeben sich jedoch abhängig von der Partikelgröße aufwendig große Bauhöhen für den Apparat, in den das Hydrosol verspritzt wird. Dies hat zur Folge, daß dies bekannte Verfahren sehr kostenintensiv ist, da entsprechend viel Material benötigt wird, ein großer Platzbedarf entsteht und mehr Zeit zur Herstellung der Apparate erforderlich ist. Weiterhin fallen bei diesem bekannten Verfahren Lyogelpartikel mit inhomogener Größenverteilung an, die gegebenenfalls anschließend nach ihrer Größe noch sortiert werden müssen, so daß das Verfahren insgesamt noch zeit- und damit kostenintensiver wird.

Allen oben erwähnten Verfahren ist gemeinsam, daß zur Initiierung der Gelbildung zwei oder mehr Ausgangskomponenten, z.B. Wasserglaslösung und Mineralsäure zusammengebracht werden müssen. Es erweist sich dabei als günstig für die Eigenschaften der Gelpartikel, insbesondere für ihre spätere Stabilität, wenn die Form und Größe der Partikel bereits vor dem Gelbildungsvorgang eingestellt werden. Es ist besonders vorteilhaft für die anschließenden verfahrenstechnischen Prozeßschritte nach der Gelbildung und Formgebung, wie z.B. für Wäschen, für gegebenenfalls nachfolgende Reaktionen und für die anschließende Trocknung, wenn die Partikel in einer leicht handhabbaren Form, also z.B. als Kugeln, vorliegen. Kugelförmige Partikel sind hinsichtlich ihrer Stabilität allen anderen Geometrien überlegen. Aufgrund der regelmäßigen Geometrie und der fehlenden Kanten und Ecken kann unerwünschter Abrieb bei den nachfolgenden Prozeßschritten weitestgehend vermieden werden. Im wesentlichen kugelförmige Lyogele besitzen den Vorteil, daß sich die Partikelgrößenverteilung des aus dem Lyogel hergestellten Endproduktes besonders leicht durch den Formgebungsprozeß einstellen läßt.

Der vorliegenden Erfindung liegt daher die Aufgabe zugrunde, ein Verfahren zur Herstellung von im wesentlichen kugelförmigen Lyogelen bereitzustellen, bei dem die Nachteile der bekannten Verfahren vermieden werden.

Gelöst wird diese Aufgabe dadurch, daß die gelbildenden Komponenten zum Lyosol vermischt werden und anschließend das Lyosol zur Bildung des Lyogels in ein bewegtes Medium eingebracht wird, das sich in dem Lyosol nicht merklich löst.

Unter einem Lyosol bzw. Lyogel ist in der vorliegenden Anmeldung ein Sol bzw. Gel zu verstehen, bei dem die Sol- bzw. Gel-Zwischenräume mit Flüssigkeit ausgefüllt sind. Besteht die Flüssigkeit im wesentlichen aus Wasser, so spricht man von einem Hydrosol bzw. Hydrogel.

Durch das Einbringen in eine bewegte Atmosphäre wird die Verweilzeit der Lyosolpartikel in dem Medium deutlich erhöht, so daß die Bauhöhe des Apparates deutlich verringert werden kann. Daher haben die Apparate einen erheblich geringeren Material- und Platzbedarf, so daß die Kosten des erfindungsgemäßen Verfahrens beträchtlich reduziert sind.

Vorteilhafterweise ist das Medium eine Luftatmosphäre, wobei dem Lyosol weitere Stoffe zugegeben werden können, bevor es in die Luftatmosphäre eingebracht wird. Die Luft kann dabei noch andere gasförmige Medien enthalten. Zum Vermischen der gelbildenden Komponenten und zum Einbringen des Lyosols sind alle dem Fachmann zu diesem Zweck bekannten Vorrichtungen geeignet.

Zweckmäßigerweise wird das Lyosol in die Luft getropft oder gesprüht, vorzugsweise in Richtung der Schwerkraft.

Gemäß einer bevorzugten Ausführungsform wird das Lyosol in einen Luftstrom aufgegeben, der im wesentlichen der Schwerkraft entgegengerichtet strömt. Die Luftströmung kann dabei auch anders gerichtete Geschwindigkeitskomponenten enthalten. Damit kann die Verweilzeit der Partikel in der Luft gezielt weiter erhöht werden, wodurch sich eine weitere Einsparung in der Bauhöhe des Apparates ergibt, in den das Lyosol eingebracht wird. Die entgegen der Schwerkraft gerichtete Luftströmung kann außerdem zu einer Klassierung bzw. Sichtung der Tropfen bzw. Partikel während der Gelbildung herangezogen werden. Partikel mit einem Durchmesser unterhalb des mit der Strömungsgeschwindigkeit korrespondierenden Grenzkorndurchmessers werden nach oben ausgetragen, wohingegen größere Partikel nach unten ausgetragen werden. Damit ist kein zusätzlicher Schritt zur Sortierung der Gelpartikel ihrer Größe nach erforderlich, so daß die Kosten des erfindungsgemäßen Verfahrens weiter reduziert werden.

Eine Weiterbildung dieser Ausführungsform sieht vor, daß das Lyosol in eine Luftströmung eingebracht wird, deren Geschwindigkeit sich in Strömungsrichtung verringert.

Eine weitere bevorzugte Ausführungsform des Verfahrens besteht darin, daß die Lyosoltröpfchen nach der Umwandlung zum Lyogel in einer Wasserschicht aufgefangen werden.

Durch die entgegen der Fallrichtung strömende Luft ergibt sich ein weiterer Effekt aus der verringerten Fallgeschwindigkeit der Kugeln; dies bewirkt ein schonenderes Eintauchen der Lyogelkugeln beispielsweise in eine Wasserschicht.

Als Ausgangsstoffe für das erfindungsgemäße Verfahren sind grundsätzlich alle Stoffe geeignet, die für die bekannten Wege zur Synthese von Lyogelen beispielsweise als Vorstufe für ein Aerogel verwendbar sind (siehe z.B. J. Brinker, G. W. Scherer, Sol-Gel Science: The Physics and Chemistry of Sol/Gel Processing, Academic Press Ltd., London 1990; DE-A-43 42 548; US-A 5,081,163; US-A 4,873218).

Bevorzugt sind dabei die Vorstufen von SiO₂-Hydrosolen, z.B. Kieselsäure und Mineralsäure. Besonders bevorzugt sind Natrium-Wasserglas-Lösungen und Salzsäure.

Eine weitere Aufgabe der vorliegenden Erfindung besteht darin, ein Verfahren zur Herstellung von im wesentlichen kugelförmigen Aerogelen bereitzustellen.
Diese Aufgabe wird durch ein Verfahren gelöst, bei dem man ein im wesentlichen kugelförmiges Lyogel, wie es gemäß der vorliegenden Erfindung hergestellt werden kann, zu einem Aerogel umsetzt.

Das Verfahren zur Umsetzung des Lyogels zu einem Aerogel ist in keinster Weise beschränkt. Es können alle dem Fachmann bekannten Verfahrensvarianten angewendet werden.

In einer bevorzugten Ausführungsform wird das im wesentlichen kugelförmige Lyogel mit einem Silylierungsmittel umgesetzt. Es können alle dem Fachmann bekannten Silylierungsmittel, wie z.B. Trimethylchlorsilan, verwendet werden. Vor der Silylierung kann das Lyogel gewaschen werden und/oder das Lösungsmittel des Lyogels gegen ein anderes, organisches Lösungsmittel ausgetauscht werden. Die Wäsche des Lyogels bzw. Hydrogels sowie der Lösungsmitteltausch kann dabei nach allen aus dem Stand der Technik beschriebenen Verfahren durchgeführt werden.

Die Trocknung kann ebenfalls nach allen dem Fachmann bekannten Trocknungsverfahren durchgeführt werden. Bevorzugt sind dabei die für Aerogele bekannten überkritischen sowie unterkritischen Trocknungsverfahren, wobei die unterkritische Trocknung besonders bevorzugt ist.

Nachstehend wird das erfindungsgemäße Verfahren annand eines Ausführungsbeispieles näher beschrieben.

### Beispiel 1

Eine Natrium-Wasserglaslösung wird durch Verdünnung von 53,5 kg handelsüblicher Natrium-Wasserglas-Lösung mit 25,5% SiO₂ und 7,6% Na₂O mit 31,7 kg deionisiertem Wasser hergestellt. Eine verdünnte Salzsäure wird durch Verdünnung von 19,3 kg handelsüblicher 25 Gew.%-iger Salzsäure mit 65,8 kg deionisiertem Wasser hergestellt. Jeweils 30 kg/h der verdünnten Salzsäure und der verdünnten Wasserglaslösung werden genau dosiert einer Misch- und Sprühvorrichtung zugeführt. Der Ausgang der Mischdüse befindet sich am oberen Ende eines Rohres, durch das beheizte Luft senkrecht nach oben strömt. Das untere Drittel des Rohres ist mit Wasser befüllt. Über der Wasseroberfläche befinden sich im Rohr die Lufteinlaßöffnungen. Der Luftstrom wird auf eine Leerrohrgeschwindigkeit von 4 m/s eingestellt. Die Innentemperatur des Rohres beträgt 100°C. Die Hydrogelkügelchen werden in der Wasserschicht aufgefangen, sedimentieren durch die Wasserschicht und werden durch einen Wasserstrom aus dem Sprühturm ausgetragen.

Die Hydrogelkügelchen werden kontinuierlich mit 0,1 mol-Salzsäure und anschließend mit deionisiertem Wasser gewaschen. Im Anschluß werden die Lyogelkügelchen mit Aceton in mehreren Stufen gewaschen, bis der Wassergehalt im Gel kleiner 1% beträgt. Das acetonfeuchte Gel wird mit einer Mischung aus Aceton und 5% Trimethylchlorsilan 10 Stunden lang beaufschlagt. Anschließend wird das Gel wieder in mehreren Stufen mit Aceton gewaschen. Die acetonfeuchten Gelkügelchen werden in einer Wirbelschicht mit Stickstoff bei 180°C 5 Minuten lang getrocknet. Die erhaltenen Aerogelkugeln weisen eine Dichte von 130 kg/m³ auf. Ihre Wärmeleitfähigkeit beträgt 0,01 W/mK.

## Patentansprüche

1. Verfahren zur Herstellung von im wesentlichen kugelförmigen Lyogelen, bei dem die gelbildenden Komponenten zum Lyosol vermischt werden und anschließend das Lyosol zur Bildung des Lyogels in ein bewegtes Medium eingebracht wird, das im wesentlichen der Schwerkraft entgegen gerichtet strömt und das sich in dem Lyosol nicht merklich löst.

2. Verfahren gemäß Anspruch 1, **dadurch gekennzeichnet, daß** das Medium Luft ist.

3. Verfahren gemäß Anspruch 2, **dadurch gekennzeichnet, daß** die Luft mindestens ein weiteres gasförmiges Medium enthält.

4. Verfahren gemäß Anspruch 2 oder 3, **dadurch gekennzeichnet, daß** das Lyosol in die bewegte Luft getropft wird.

5. Verfahren gemäß Anspruch 2 oder 3, **dadurch gekennzeichnet, daß** das Lyosol in die bewegte Luft gesprüht wird.

6. Verfahren gemäß mindestens einem der Ansprüche 2 bis 5, **dadurch gekennzeichnet, daß** die Lyosol-Partikel durch den entgegen der Schwerkraft gerichteten Luftstrom ihrer Größe nach gesichtet werden.

7. Verfahren gemäß mindestens einem der Ansprüche 2 bis 5, **dadurch gekennzeichnet, daß** der Luftstrom seine Geschwindigkeit in Strömungsrichtung verringert.

8. Verfahren gemäß mindestens einem der vorhergehenden Ansprüche, **dadurch gekennzeichnet, daß** die Lyosol-Partikel in einer Wasserschicht aufgefangen werden.

9. Verfahren gemäß mindestens einem der vorhergehenden Ansprüche, **dadurch gekennzeichnet, daß** das Lyosol aus Kieselsäure und Mineralsäure gebildet wird.

10. Verfahren gemäß mindestens einem der Ansprüche 1 bis 8, **dadurch gekennzeichnet, daß** das Lyosol aus einer Natrium-Wasserglas-Lösung und Salzsäure gebildet wird.

11. Verwendung von im wesentlichen kugelförmigen Lyogelen, hergestellt gemäß mindestens einem der vorhergehenden Ansprüche, zur Herstellung von Aerogelen.

12. Verfahren zur Herstellung von im wesentlichen kugelförmigen Aerogelen, bei dem ein im wesentlichen kugelförmiges Lyogel, hergestellt gemäß mindestens einem der Ansprüche 1 bis 10, zu einem Aerogel umgesetzt wird.

## Revendications

1. Procédé pour la préparation de lyogels essentiellement sphériques, dans lequel on mélange les composants gélifiants au lyosol et ensuite on introduit le lyosol pour la formation du lyogel dans un milieu mobile, qui s'écoule essentiellement à contre-courant de la force de gravité et qui ne se dissout pas notablement dans le lyosol.

2. Procédé selon la revendication 1, **caractérisé en ce que** le milieu est l'air.

3. Procédé selon la revendication 2, **caractérisé en ce que** l'air contient au moins un autre milieu gazeux.

4. Procédé selon la revendication 2 où 3, **caractérisé en ce que** le lyosol est introduit goutte à goutte dans l'air mobile.

5. Procédé selon la revendication 2 ou 3, **caractérisé en ce que** le lyosol est pulvérisé dans l'air mobile.

6. Procédé selon au moins l'une des revendications 2 à 5, **caractérisé en ce que** les particules de lyosol sont classifiées en fonction de leur taille au moyen du flux d'air dirigé contre la force de gravité.

7. Procédé selon au moins l'une des revendications 2 à 5, **caractérisé en ce que** le flux d'air diminue sa vitesse dans le sens de l'écoulement.

8. Procédé selon au moins l'une des revendications précédentes, **caractérisé en ce que** les particules de lyosol sont captées dans une couche d'eau.

9. Procédé selon au moins l'une des revendications précédentes, **caractérisé en ce que** le lyosol est formé par l'acide silicique et un acide minéral.

10. Procédé selon au moins l'une des revendications 1 à 8, **caractérisé en ce que** le lyosol est formé par une solution d'orthosilicate de sodium et par l'acide chlorhydrique.

11. Utilisation de lyogels essentiellement sphériques, préparés selon au moins l'une des revendications précédentes, pour la préparation d'aérogels.

12. Procédé pour la préparation d'aérogels essentiellement sphériques, dans lequel on transforme un lyogel essentiellement sphérique, préparé selon au moins l'une des revendications 1 à 10, en un aérogel.

## Claims

1. A method of producing substantially globular lyogels in which the gel forming components are blended to form the lyosol after which, in order to form the lyogel, the lyogel is introduced into a moving medium which flows substantially against the direction of the force of gravity and which does not perceptibly dissolve in the lyosol.

2. A method according to claim 1, **characterised in that** the medium is air.

3. Method according to claim 2, **characterised in that** the aircontains at least one further gaseous medium.

4. A method according to claim 2 or 3, **characterised in that** the lyosol is moved dropwise into the moving air.

5. A method according to claim 2 or 3, **characterised in that** the lyosol is sprayed into the moving air.

6. A method according to at least one of claims 2 to 5, **characterised in that** the lyosol particles are sorted according to size by the air stream which is directed in opposition to the force of gravity.

7. A method according to at least one of claims 2 to 5, **characterised in that** the velocity of the air stream diminishes in the direction of flow.

8. A method according to at least one of the preceding claims, **characterised in that** the lyosol particles are trapped in a layer of water.

9. A method according to at least one of the preceding claims, **characterised in that** the lyosol is formed from silicic acid and mineral acid.

10. A method according to at least one of claims 1 to 8, **characterised in that** the lyosol is formed from a sodium waterglass solution and hydrochloric acid.

11. Use of substantially globular lyogels, produced according to at least one of the preceding claims, for the production of aerogels.

12. A method of producing substantially globular aerogels in which a substantially globular lyogel, produced according to at least one of claims 1 to 10, is converted to an aerogel.
